# EUROPEAN PATENT APPLICATION

(11) **EP 2 701 082 A1**
(43) Date of publication of application: **26.02.2014**
(21) Application number: 13179043.8
(22) Date of filing: 02.08.2013
(51) Int. Cl.: G06F 17/30

(54) **File search apparatus, file search method, image search apparatus, and non-transitory computer readable storage medium**

(30) Priority: 23.08.2012 JP 2012184575; 18.07.2013 JP 2013149937
(71) Applicant: Canon Kabushiki Kaisha, Tokyo 146-8501 (JP)
(72) Inventor: Oka, Hiroto, Tokyo,, Tokyo 146-8501 (JP)
(74) Representative: TBK

(57) **Abstract**

A file search apparatus (100) having a setting means (101) configured to set, as search conditions for specifying a file to be searched for, a plurality of pieces of attribute information and relationship information about a relationship between files, a first search means (101) configured to search for a file having at least one of the pieces of attribute information set by the setting means, a second search means (101) configured to search for a plurality of files, among the files found by the first search means, which satisfy a condition based on the relationship information set by the setting means, and an output means for outputting, as a search result, the plurality of files found by the second search means.

## Description

### BACKGROUND OF THE INVENTION

### Field of the Invention

The present invention relates to a file search apparatus, a file search method, an image search apparatus, and a non-transitory computer readable storage medium.

### Description of the Related Art

To manage and search images, each shot image is assigned with metadata such as a keyword. In recent years, the number of images shot by a user has increased along with the popularization of digital cameras, mobile phones, and smartphones, and thus easy managing and searching of those images has become an important issue.

An example of a method of solving this issue is a technique of automatically assigning a keyword to an image. For example, a person's name is assigned to an image by recognizing the face of an object, or a place name or landmark name is assigned to an image by acquiring from GPS information a position where the image is shot.

On the other hand, there has been proposed a technique of introducing a time-series concept to search for an image by a keyword. In an apparatus for searching for a log associated with a trouble in a substrate processing apparatus according to Japanese Patent Laid-Open No. 2008-140248, keywords are ordered in a time sequence. If logs including the keywords sequentially appear in this sequence, a corresponding log is highlighted. This makes it possible to readily find troubles occurring in a time sequence.

### SUMMARY OF THE INVENTION

The present invention in its first aspect provides a file search apparatus as specified in claims 1 to 7.

The present invention in its second aspect provides a file search method as specified in claim 8.

The present invention in its third aspect provides a non-transitory computer readable storage medium as specified in claim 9.

The present invention in its fourth aspect provides an image search apparatus as specified in claims 10 to 13.

The present invention in its fifth aspect provides an image search apparatus as specified in claim 14.

Further features of the present invention will become apparent from the following description of exemplary embodiments (with reference to the attached drawings).

### BRIEF DESCRIPTION OF THE DRAWINGS

Fig. 1 is a block diagram showing an example of the arrangement of an image search apparatus according to an embodiment of the present invention;

Fig. 2 is a view showing an example of a dialog for inputting search conditions for an image search apparatus according to the first embodiment of the present invention;

Fig. 3A is a view for explaining search processing according to the first embodiment of the present invention;

Fig. 3B is a view for explaining the data structure of image data according to the first embodiment of the present invention;

Fig. 4A is a flowchart illustrating an example of the search processing according to the first embodiment of the present invention;

Fig. 4B is a flowchart illustrating another example of the search processing according to the first embodiment of the present invention;

Fig. 5 is a table showing an example of the data structure of a keyword table according to the first embodiment of the present invention;

Fig. 6 is a view showing an example of display of the search result of the image search apparatus according to the first embodiment of the present invention;

Fig. 7 is a view showing an example of display of a search result on the main window of the image search apparatus according to the first embodiment of the present invention;

Fig. 8 is a view showing an example of a dialog for inputting search conditions for an image search apparatus according to the second embodiment of the present invention;

Fig. 9 is a table showing an example of the data structure of a keyword table according to the second embodiment of the present invention;

Fig. 10A is a flowchart illustrating an example of search processing according to the second embodiment of the present invention;

Fig. 10B is a flowchart illustrating an example of determination processing when the appearance order of keywords is considered in the search processing according to the second embodiment of the present invention;

Fig. 10C is a flowchart illustrating an example of determination processing when the appearance order of keywords is not considered in the search processing according to the second embodiment of the present invention;

Fig. 11 is a view showing an example of a dialog for inputting search conditions for an image search apparatus according to the third embodiment of the present invention;

Fig. 12 is a view for explaining the concept of search processing according to the third embodiment of the present invention; and

Fig. 13 is a flowchart illustrating an example of the search processing according to the third embodiment of the present invention.

### DESCRIPTION OF THE EMBODIMENTS

Embodiments of the present invention will be described below in connection with a file search apparatus.

When a plurality of keywords are given as search conditions, a file search apparatus for performing a file search may not be able to find a file if the keywords are not assigned to the file. As an example in which a plurality of keywords are used to search for a file, however, the user wants to search for a plurality of images based on a memory of having shot the images in a past trip. For example, based on a memory of having shot a "lunch" scene immediately after shooting a "temple" scene, the user searches images in a trip in which such shooting operations have been performed. Assume that the technique of Japanese Patent Laid-Open No. 2008-140248 is applied to an image search operation. In this case, if images respectively assigned a plurality of keywords appear in a time sequence, the images of interest may be found but the interval between the shooting dates/times of the images and the distance between the shooting locations of the images are not considered. It is, therefore, difficult to efficiently search for images shot within a given period or images shot in a specific region.

With respect to this problem, a file search apparatus capable of efficiently searching for files (for examples, shot images) generated or updated within a given period or in a specific region, even if a plurality of keywords are not assigned to each file, will be described below.

The file search apparatus allows the user to designate pieces of attribute information of files as search conditions, and to designate, as search conditions, relationship information for designating the relationship between files to extract, as a search result, files with the attribute information. Among files (a group of files) assigned the plurality of pieces of attribute information designated as search conditions, files which satisfy the conditions based on the designated relationship information are extracted and outputted as a search result. More practical embodiments of the present invention will be described below with reference to the accompanying drawings.

### [First Embodiment]

A file search apparatus according to this embodiment performs a search by specifying files each of which satisfies a predetermined temporal condition (temporal relationship) with respect to a file assigned one of a plurality of keywords and is assigned another one of the plurality of keywords.

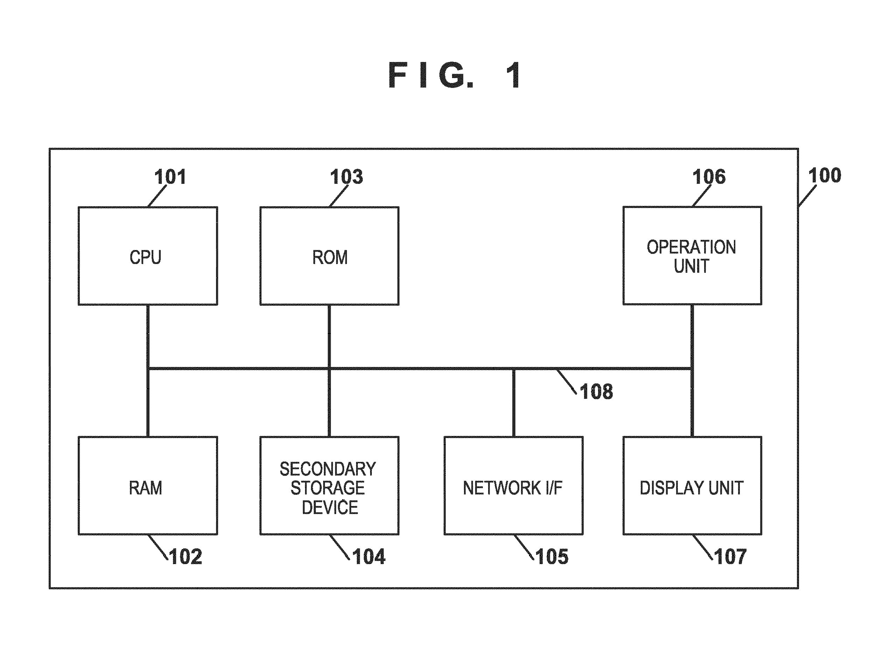

Fig. 1 is a block diagram showing the file search apparatus according to this embodiment. In the embodiment to be described below, the file search apparatus is implemented in the form of an application running on, for example, a PC (personal computer) 100. However, the embodiment of the file search apparatus is not limited to the PC. For example, a digital camera, digital video camera, mobile phone, smartphone, another cellular electronic device, or the like may be used. The arrangement of each of these electronic devices is basically the same as that shown in Fig. 1. Note that if these electronic devices have a camera function, a search technique according to the present invention can be used to manage images obtained by performing shooting using the camera.

Search targets of the file search apparatus can include various types of files and contents such as image files like still images and moving images, text files, and presentation files. That is, it is possible to search for files assigned date/time information such as a creation date/time and update date/time, and metadata serving as search conditions, based on these pieces of information. Furthermore, it is not necessary to limit search target files and contents to one single type. For example, still images, moving images, presentation files, e-mail messages, and the like can collectively be search targets. Note that the operation of the file search apparatus will be explained below especially based on an example of an image search apparatus in which a search target file is an image.

The PC 100 includes a CPU 101, a RAM 102, and a ROM 103. The ROM 103 stores a basic control program for the file search apparatus. The control program includes a search processing program according to the embodiment. Upon start of the file search apparatus, the control program is read into the RAM 102 and executed by the CPU 101. A secondary storage device 104 is actually a hard disk, a memory disk, or the like. The secondary storage device 104 stores a high-level control program (for example, an operating system), an image browser, a database for managing information associated with image data, an application for connecting to a camera and loading image data into the PC 100, loaded image data, and the like. These software programs are read into the RAM 102 and executed by the CPU 101, as needed. A network interface (I/F) 105 is a USB interface for connecting a USB cable which is used to connect the PC 100 to the camera. An operation unit 106 accepts an operation of issuing an instruction to the file search apparatus by the user, and includes a keyboard and mouse. A display unit 107 displays an image or graphical user interface (GUI) according to display control of the CPU 101, and includes a monitor. A bus 108 is used by the units 101 to 107 to exchange information.

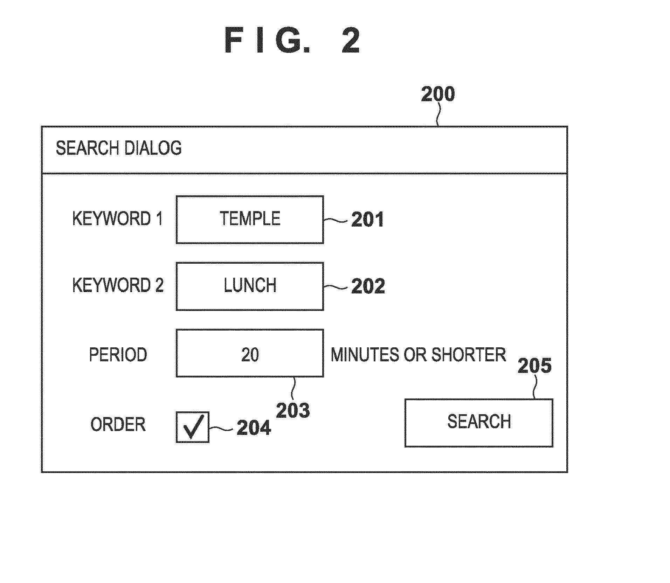

Fig. 2 shows a display screen (user interface: UI) displayed on the display unit 107 of the PC 100 when the user instructs a keyword search in the file search apparatus or application according to this embodiment. In a dialog 200 shown in Fig. 2, text boxes 201 and 202 are areas for inputting keywords.
The user can input a keyword to each text box. In Fig. 2, keywords "temple" and "lunch" are input. A box 203 is a text box for inputting a period associated with images assigned the input keyword. In this example, a value of "20" minutes is input. This period represents an allowable period between a date/time when an image assigned a first keyword (Kw1) is shot and a date/time when an image assigned a second keyword (Kw2) is shot. For example, in the example shown in Fig. 2, an image assigned the second keyword "lunch" which has been shot within "20 minutes" after shooting an image assigned the first keyword "temple" is searched for. A box 204 is a checkbox for setting whether to perform a search in time-series in consideration of the appearance order of the keywords. In this example, as the checkbox is ON, a search based on the period and the appearance order of the first and second keywords is executed. A search button 205 is a button for accepting a search start instruction.

Note that Fig. 2 shows a case in which arbitrarily input character strings are used as search conditions. Instead, it is possible to designate, as search conditions, information managed in association with search target contents. For example, an image has camera parameters (focal length, zoom magnification, exposure time, aperture value, presence/absence of flash, ISO sensitivity, and the like), shooting mode information (portrait mode, landscape mode, sports mode, toy camera mode, monochrome mode, georama mode, fish eye mode, and the like), a favorite rating, and the like. When a user clicks a point on a map, GPS information may be accepted as the search condition. In this case, the GPS information specified as the search condition is compared with GPS information included in the metadata of the images to find images.

Furthermore, the search condition may include an item related to a person. For example, a person's name may be directly inputted as a keyword and a picture including a person to be searched may be designated as a query image. For the search using the inputted person's name, a table may be prepared in advance in which, face feature amounts extracted from pictures of persons to be searched are registered associated with the name of respective persons. When the search is performed based on the designated person's name, the face feature amounts associated with the designated person's name are acquired from the table and images including a face image having face feature amounts similar to the acquired face feature amounts are searched. The image including the person may be searched by searching for images having metadata which include the same person's name as the designated name. In such a case, a person's name is included in metadata of an image in advance. When using the query image, face feature amounts of the person in the query image are extracted and used for the search. A table may be prepared for storing and associating a person name with a query image. The person's name in the designated query image can be specified as the keyword using the table and images with metadata including the person's name corresponding to the keyword will be searched.

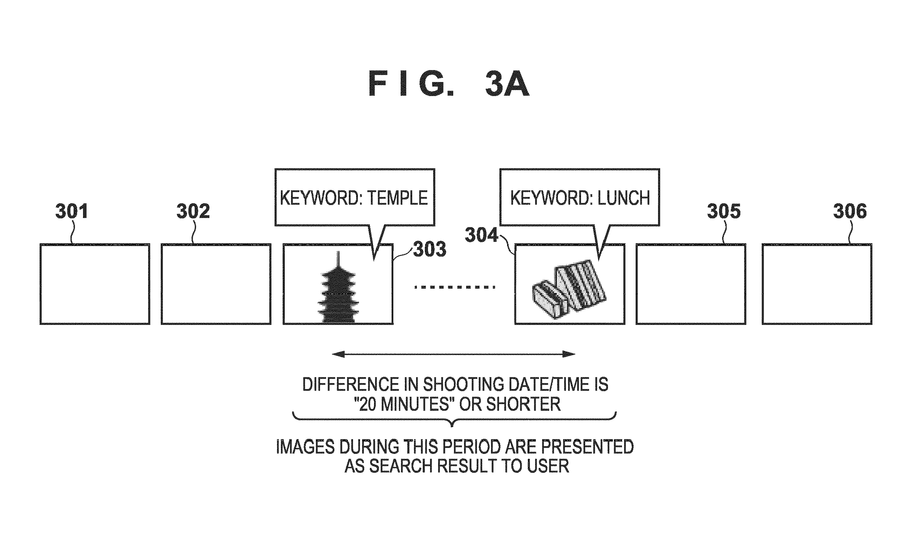

Fig. 3A is a view for explaining a case in which images are actually searched based on the image search conditions shown in Fig. 2. To perform the processing, programs for metadata acquisition processing and search processing are loaded from the secondary storage device 104 into the RAM 102 and executed by the CPU 101.

Images 301 to 306 indicate some of images in the hard disk of the PC 100, which have been sorted using a shooting date/time as a key. Assume that the image 303 is assigned the keyword "temple" and the image 304 is assigned the keyword "lunch". In this embodiment, the shooting date/time of the image 303 and that of the image 304 are compared. If the image 304 has been shot after the image 303 and the difference between the shooting dates/times is equal to or shorter than "20" minutes, the images 303 and 304 are obtained as a search result. In the above example, the image 304 has been shot following the image 303. In this embodiment, however, even if an arbitrary number of images have been shot between the images 303 and 304, as long as the aforementioned image search conditions are satisfied, the images 303 and 304 and all the images existing between them are obtained as a search result.

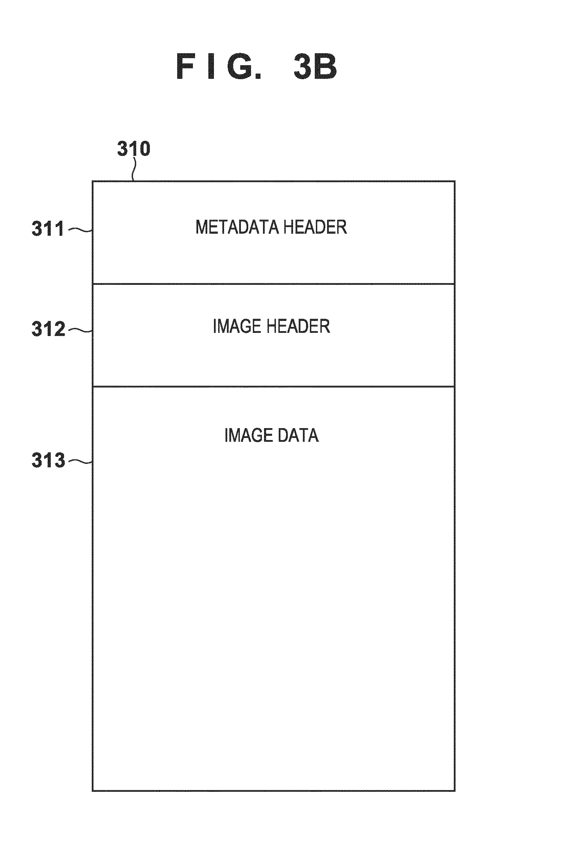

Fig. 3B is a view showing an example of the data structure of image data used in this embodiment. Image data 310 is a file and corresponds to one image data. An area 311 serves as a metadata header portion which stores additional information about the image as metadata (search information). The metadata are defined by a standard such as the Exif standard, and include, for example, a shooting date/time and camera parameters upon shooting (for example, focal length and zoom magnification), a rating (favorite rating), a keyword for an image search, comments, a thumbnail, and position information (GPS information) of a shooting location. As described above, it is possible to designate these pieces of information as search conditions. An area 312 serves as a header portion which stores information necessary for decoding the image. For example, for a JPEG image, the area 312 stores a thumbnail image obtained by reducing the image. An area 313 stores the actual data of the image.

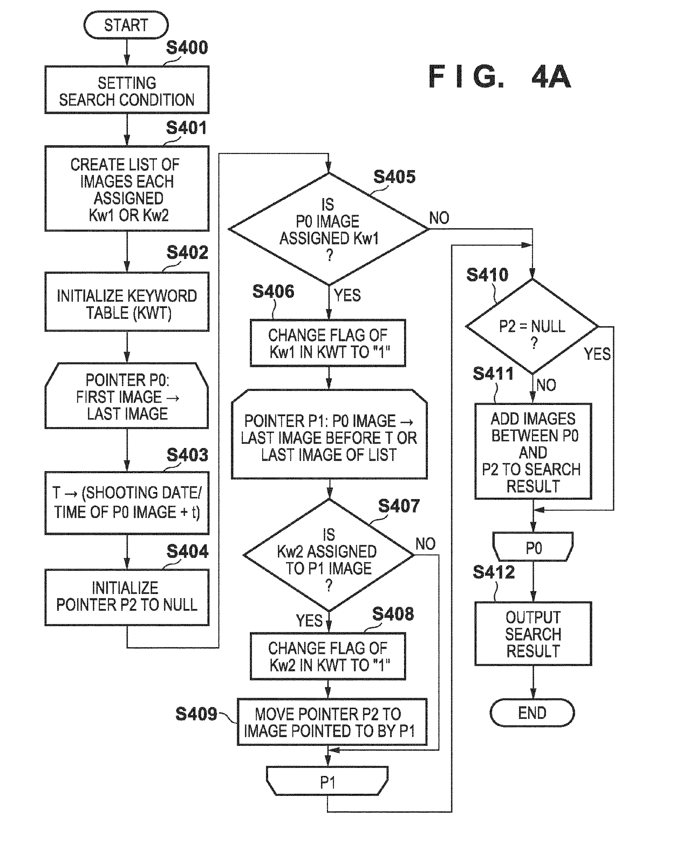

The procedure of the search processing described with reference to Fig. 3A will be explained with reference to Fig. 4A. Fig. 4A is a flowchart illustrating the search processing according to the embodiment of the present invention.

When the user instructs a keyword search, in step S400, the search conditions are set by receiving inputs from the user using the dialog 200. In step S401, the database in the secondary storage device 104 is searched for images each assigned the keyword "temple" (to be referred to as Kw1 hereinafter) or "lunch" (to be referred to as Kw2 hereinafter) designated as the search conditions, and a list of the images is created. At this time, the function of the database is used to sort the images in chronological order based on their shooting dates/times. Note that data of all images in the hard disk of the PC 100 are registered in the database. Techniques of registering data in the database, searching the database for data, creating a list, and sorting data are well known, and a description thereof will be omitted. For the images acquired from the database, a list of the file paths of the images is created and stored in the RAM 102. As another example, the acquired images may be stored as a list of integral values (identification information) each unique to each image, as a matter of course.

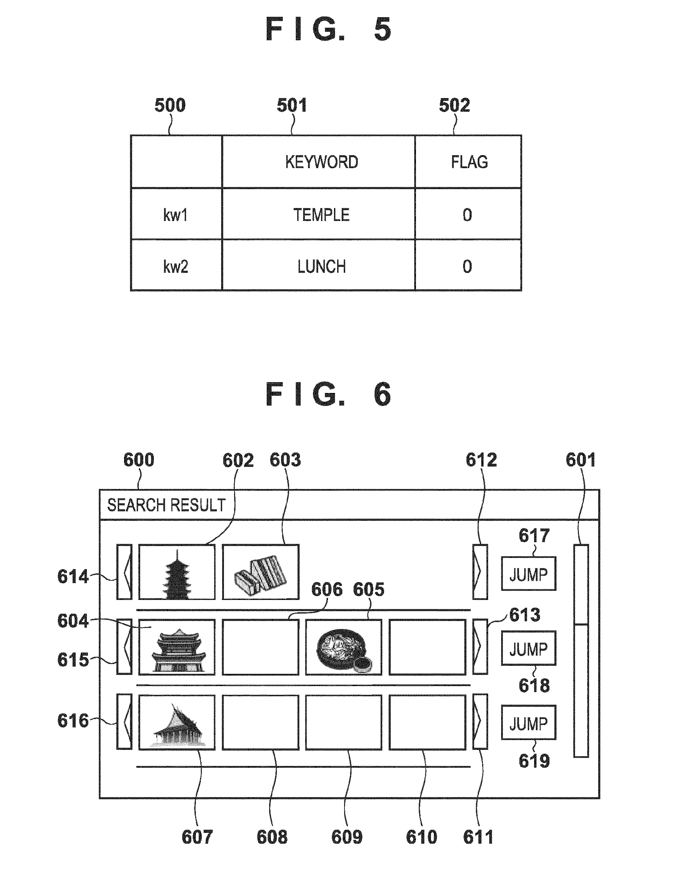

The process advances to step S402 to initialize a keyword table (KWT) on the RAM 102. Fig. 5 is a table showing an example of a keyword table 500 created in the search processing. In this embodiment, since a case in which the number of keywords is two is explained, the number of entries in the keyword table 500 is two. Referring to Fig. 5, a keyword is stored in a column 501 and a flag value is stored in a column 502. As an initial flag value, "0" is stored. How to use the flag will be described later.

After that, processing in steps S403 to S411 is executed for an image (P0 image) sequentially pointed to by a pointer P0 on the list. The pointer P0 sequentially designates an image from the first image to the last image of the keyword table 500. First, the process advances to step S403, and a variable T of data type representing a date/time is set to a value obtained by adding a predetermined time value t (for example, 20 minutes) to the shooting date/time of the P0 image. If, for example, the shooting date/time of the P0 image is "2012/06/25 12:34", T is set to "2012/06/25 12:54". In step S404, a pointer P2 is initialized to NULL. In step S405, it is determined whether the P0 image is assigned the first keyword Kw1 (that is, "temple"). The keyword may be extracted from the image file in step S405, or may be extracted and stored in the database in advance and read out from the database upon execution of the processing in step S401 or S405. If the first keyword Kw1 is not assigned ("NO" in step S405), the process advances to step S410. On the other hand, if the first keyword Kw1 is assigned ("YES" in step S405), the process advances to step S406. In step S406, the flag of Kw1 in the keyword table 500 is changed to "1".

Processing in steps S407 to S409 is executed for an image (P1 image) sequentially pointed to by a pointer P1. The pointer P1 sequentially designates an image from the P0 image to an image with a latest shooting date/time before the variable T in the list. Note that if the last image of the list has a shooting date/time before the time T, the pointer P1 sequentially designates an image up to the last image of the list. In step S407, it is determined whether the P1 image is assigned Kw2. If the P1 image is assigned Kw2 ("YES" in step S407), the process advances to step S408 to change the flag of Kw2 in the keyword table 500 to "1". On the other hand, if Kw2 is not assigned ("NO" in step S407), the pointer P1 is moved to the next image of the list, thereby repeating the process. In step S409, the pointer P2 is moved to the image pointed to by the pointer P1. After the aforementioned processing in steps S407 to S409 is executed for all images included in a processing range, the process advances to step S410. In step S410, it is determined whether the pointer P2 is NULL. If the pointer P2 is NULL ("YES" in step S410), the pointer P0 is incremented by one, and the processing in step S403 and subsequent steps is executed for the next image.
If the pointer P2 is not NULL ("NO" in step S410), the process advances to step S411, and the P0 image, the P2 image, and all images shot between them are acquired from the database and added to a search result. After that, the pointer P0 is incremented by one and the processing in step S403 and subsequent steps is executed for the next image. If the processing is complete for the last image of the list, in step S412, the search result is outputted on the display unit 107 and the whole process ends. With this process, it is possible to find the P2 image which is assigned Kw2 and is temporally farthest within the value t after the shooting date/time of the P0 image, and to extract and output a group of images of the P0 image, the P2 image, and images shot between them as a search result.

An example of display of the search result obtained by the search processing shown in Fig. 4A will be described with reference to Fig. 6. Fig. 6 is a view showing an example of a display screen (user interface: UI) for displaying the search result in the file search apparatus or application according to this embodiment. To implement the display processing, a search result display program is loaded from the secondary storage device 104 into the RAM 102, and executed by the CPU 101 using information of the search result stored in the RAM 102. In this embodiment, a case in which up to three search results are displayed in a search result dialog 600 will be explained. If the number of search results is larger than three, the user can display the fourth search result and subsequent search results by operating a scroll bar 601.

Referring to Fig. 6, a thumbnail 602 is the thumbnail of an image assigned the keyword "temple" and a thumbnail 603 is the thumbnail of an image assigned the keyword "lunch". These thumbnails correspond to the images 303 and 304 shown in Fig. 3A. Similarly, thumbnails 604 and 605 are the thumbnails of images assigned the keywords "temple" and "lunch", respectively. In this search result, an image 606 has been shot between the shooting dates/times of the thumbnails 604 and 605. The image need not always be assigned the keyword "temple" or "lunch".

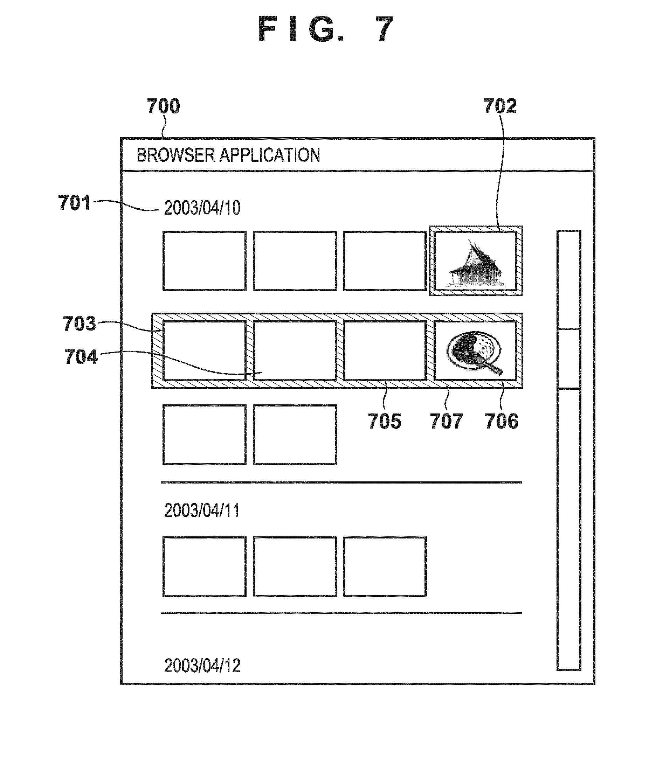

Similarly, a thumbnail 607 is the thumbnail of an image assigned the keyword "temple". In this search result, three or more images (corresponding to thumbnails 608 to 610) have been shot between the shooting dates/time of the image of the thumbnail 607 and that of an image assigned the keyword "lunch", and thus the thumbnails of the fifth image and subsequent images are not displayed. The user can scroll the search result leftward by clicking a button 611, thereby sequentially displaying the thumbnails of the fifth image and subsequent images. Buttons 612 to 616 are used to control the scroll operation, similarly to the button 611. Note that since all the images of the first and second search results are displayed on the screen, and the third search result is displayed from the first image, the buttons 612 to 616 are grayed out so as not to be clicked. Buttons 617 to 619 are jump buttons provided for the respective search results. When a jump button is clicked, the main window of the application is scrolled to display preceding or succeeding images of the search result. This operation will be described with reference to Fig. 7.

With respect to the display order of search results, the search results may be displayed in ascending order of the number of images included in a search result as shown in Fig. 6, or in descending order of the number of included images. The images of a plurality of search results may overlap each other. In this case, if all the search results are displayed, a number of similar search results are displayed, thereby spoiling the user convenience. To solve this problem, when the images of search results overlap each other at a given ratio (for example, 70%) or higher, a search result including a largest number of images may be selected. Alternatively, a search result including a larger number of images with more important one of the two keywords may be selected. Furthermore, a plurality of search results may be combined to obtain one search result.

Fig. 7 is a view showing an example of display of the main window in the file search apparatus or application according to the embodiment. A window 700 displays the thumbnails of all the images in the hard disk of the PC 100 by sorting them in chronological order based on their shooting dates/times. Fig. 7 shows the window 700 displayed immediately after the user presses the button 619 in the search result dialog 600. A date 701 indicates a date when the images 607 to 610 are shot. Thumbnails 702 to 706 are the thumbnails of the images of the search result, and highlighted by frames 707. This enables the user to confirm, by the highlighted position, an image assigned the keyword "temple", an image assigned the keyword "lunch", and intermediate images between them. With respect to the images of the search result, the user can also see temporally adjacent images, that is, images shot before the image 702 and images shot after the image 706.

Note that in the browser screen of Fig. 7, it is possible to arbitrarily select a displayed image, and edit its metadata. Metadata may be edited for each image, or a plurality of images may be selected and common contents may be set in a specific item of the metadata of each image. For example, a favorite rating can be collectively set, or a common keyword can be collectively set in comment fields. Furthermore, it is also possible to perform rotation, resizing, delete, or copy for each image or to collectively perform it for a plurality of images.

Note that in the above-described embodiment, all the images are still images. In practice, some or all of the images may be moving images. In this case, the shooting start date/time of a moving image may be regarded as the shooting date/time of the image. Alternatively, in consideration of the length of the moving image, if the image 303 is a moving image and the image 304 exists within 20 minutes after the shooting end date/time of the image 303 (or a value obtained by adding the length of the moving image to the shooting start date/time), the images 303 and 304 may be obtained as a search result.

Although the user inputs a period to the box 203 in this embodiment, the present invention is not limited to this. For example, a preset fixed value may be set as a period. Alternatively, a period may be set so that images included in a group obtained by analyzing the shooting dates/times of images and grouping them based on the shooting dates/times (for example, images with the same date are grouped) become search targets. For example, for images with the same shooting date, it is possible to set a period so that the images with the same shooting date are included in a search result.

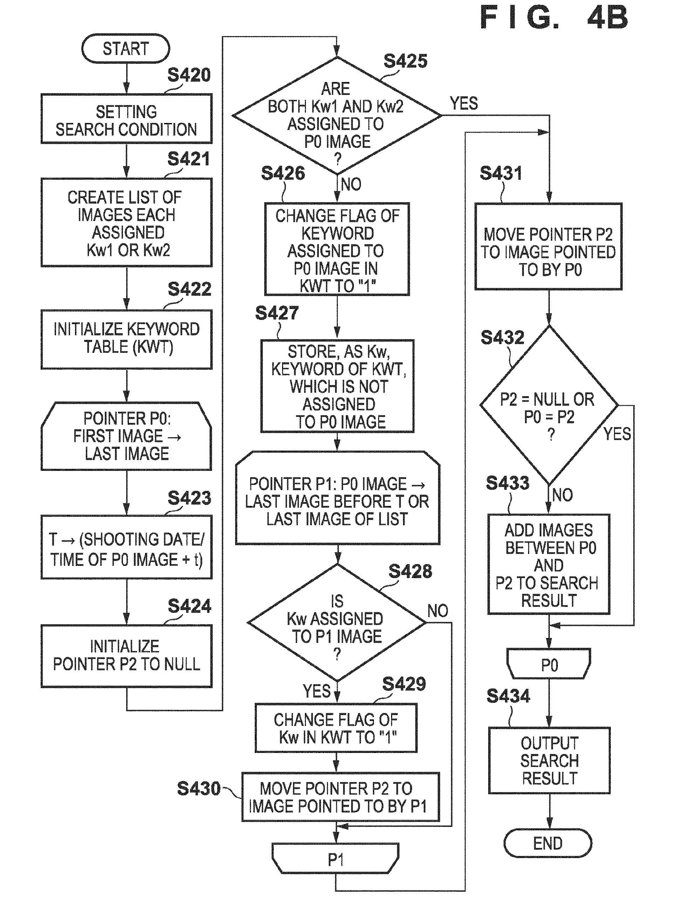

A case in which the box 204 of the dialog 200 shown in Fig. 2 is checked, and thus a search in time-series is performed in consideration of the appearance order of the keywords has been explained above. To the contrary, there may be a case in which the box 204 is not checked and the appearance order of the keywords is not considered. Therefore, a case in which the appearance order of the keywords is not considered will be described below with reference to a flowchart shown in Fig. 4B.

Processing in steps S420 to S424 is the same as that in steps S400 to S404 of Fig. 4A and a description thereof will be omitted. In step S425, it is determined whether both Kw1 and Kw2 are assigned to the P0 image pointed to by the pointer P0. If both Kw1 and Kw2 are assigned ("YES" in step S425), the process advances to step S431. In step S431, the pointer P2 is moved to the same image as the P0 image pointed to by the pointer P0, and then the process advances to step S432. On the other hand, if one of Kw1 and Kw2 is assigned ("NO" in step S425), the process advances to step S426. In step S426, in the keyword table 500, the value of the flag of the keyword assigned to the P0 image is changed to 1. In step S427, the keyword which is not assigned to the P0 image is stored as Kw in the RAM 102.

Processing in steps S428 to S430 is executed for an image (P1 image) sequentially pointed to by the pointer P1. The pointer P1 sequentially designates an image from the P0 image to an image with a latest shooting date/time before the variable T in the list. Note that if the last image of the list has a shooting date/time before the time T, the pointer P1 sequentially designates an image up to the last image of the list. In step S428, it is determined whether Kw stored in step S427 is assigned to the P1 image. If Kw is assigned to the P1 image ("YES" in step S428), the process advances to step S429, and the flag of Kw of the keyword table 500 is changed to 1. On the other hand, if Kw is not assigned ("NO" in step S428), the pointer P1 is moved to the next image of the list, thereby repeating the process. In step S430, the pointer P2 is moved to the image pointed to by the pointer P1. With this processing, the pointer P2 points an image which has been shot after the P0 image and is assigned the keyword Kw that is not assigned to the P0 image. After the aforementioned processing in steps S428 to S430 is executed for all images included in a processing range, the process advances to step S432.

In step S432, it is determined whether the pointer P2 is NULL and whether the pointer P0 coincides with the pointer P2. If it is determined in step S432 that one of the conditions is satisfied ("YES" in step S432), the pointer P0 is incremented by one and the processing from S423 is executed for the next image.
If neither of the conditions is satisfied ("NO" in step S432), the process advances to step S433, and the images designated by the pointers P0 and P2 and all images shot between them are acquired from the database and added to a search result. After that, the pointer P0 is incremented by one and the processing in step S423 and subsequent steps is executed for the next image. If the processing is complete for the last image of the list, in step S434, the search result is outputted on the display unit 107 and the whole process ends. With this process, it is possible to find the P2 image which is assigned Kw and is temporally farthest within the value t after the shooting date/time of the P0 image, and to extract the P0 image, the P2 image, and images shot between them as a search result.

As described above, an image search apparatus serving as a file search apparatus according to this embodiment can perform an image search by specifying an image which has been shot within a predetermined period after the shooting date/time of an image assigned a predetermined keyword and is assigned another keyword. This allows the user to search for images within the predetermined period even if two keywords given as search conditions are not simultaneously assigned to each image.

### [Second Embodiment]

In the above-described first embodiment, an image search apparatus has been exemplified as a file search apparatus. Especially, an operation when two keywords are input has been described. In the second embodiment, an operation when N (N ≥ 2) keywords are input to a PC application serving as an image search apparatus will be explained. In this embodiment, it is also possible to designate the type of metadata of an image which is indicated by a keyword. Note that the arrangement of a file search apparatus according to the embodiment is the same as that in the first embodiment and a description thereof will be omitted.

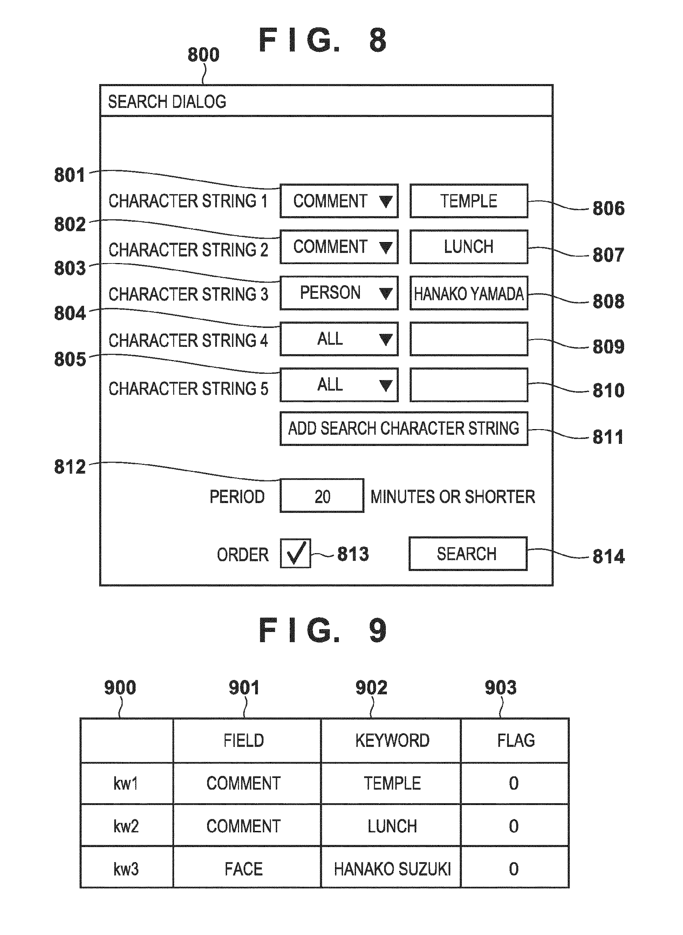

Fig. 8 is a view showing an example of a display screen displayed on a display unit 107 of a PC 100 when the user instructs a keyword search in the file search apparatus or application according to the embodiment. In a dialog 800, combo boxes 801 to 805
are areas for accepting designation of a metadata area (field) to be searched for a keyword designated by the user. The metadata of each image are stored in the metadata header portion of an area 311 shown in Fig. 3B. In this embodiment, it is possible to designate the type of metadata such as "keyword", "comment", "person", "place name", or "event", or to designate "all" metadata. Note that arbitrary information managed in association with a search target file can be designated as search conditions, similarly to the first embodiment.

The user can input text as keywords to text boxes 806 to 810. The user can input one keyword to each text box. Referring to Fig. 8, a first keyword "temple", a second keyword "lunch", and a third keyword "Hanako Yamada" are input. In this example, the user attempts to search images based on a memory of having shot "temple", "lunch", and "Hanako Yamada" in a trip with "Hanako Yamada". A button 811 is pressed to input six or more keywords. When the button 811 is clicked, the dialog 800 extends in the vertical direction, thereby allowing the user to input more keywords. Like a box 203 shown in Fig. 2, a box 812 is a text box for inputting an allowable shooting interval after the shooting date/time of an image assigned a predetermined keyword. In this example, a value of "20" minutes is input to the box 812. Like a box 204 shown in Fig. 2, a box 813 is a checkbox for setting whether to perform a search in time-series in consideration of the appearance order of the keywords. In this example, the checkbox is ON. A button 814 is pressed to start a search, similarly to a search button 205 shown in Fig. 2.

The operation of the file search apparatus or application according to the embodiment will be described.

Fig. 9 is a keyword table created in search processing. In this embodiment, since the number of keywords is two or larger (N), a keyword table 900 has two or more rows. Fig. 9 especially shows a case in which the number of keywords is three. A column 901 stores the type of metadata; a column 902, a keyword, and a column 903, "0" as a flag value.

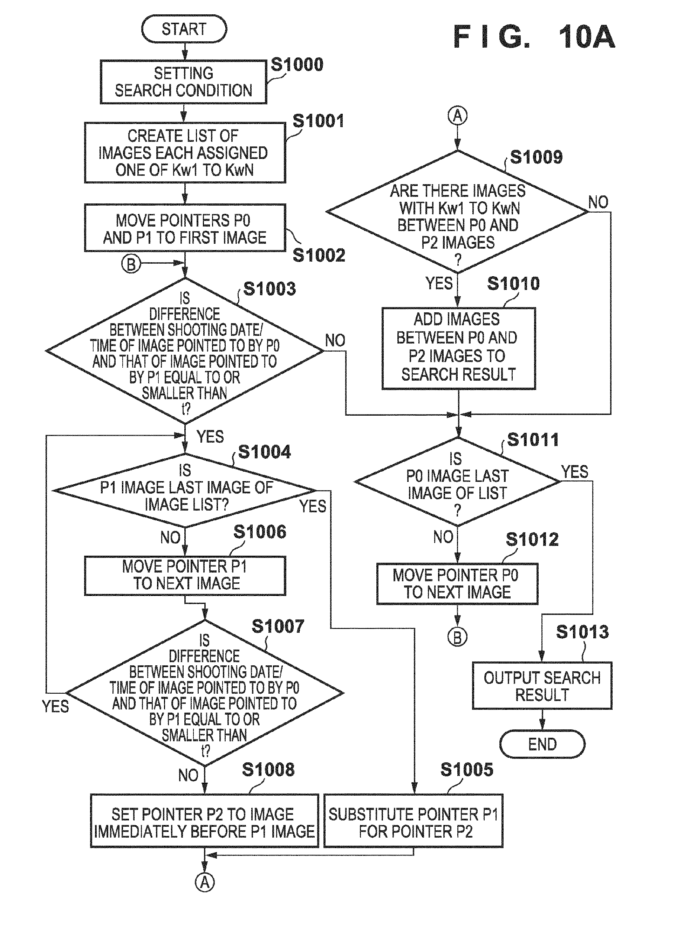

The procedure of the search processing according to the embodiment will be explained with reference to Fig. 10A. Fig. 10A is a flowchart illustrating the search processing according to the embodiment. When the user instructs a keyword search, in step S1000, the search conditions are set by receiving inputs from the user using the dialog 800. In step S1001, a database in a secondary storage device 104 is searched for images each assigned one of N keywords Kw1 to KwN designated as the search conditions, thereby creating a list of them. At this time, the function of the database is used to sort the images in chronological order based on their shooting dates/times. Note that this processing is the same as that in step S401 except for the number of keywords and thus matters associated with this processing comply with the processing in step S401. In step S1002, pointers P0
and P1 are moved to the first image of the list. In step S1003, it is determined whether the difference between the shooting date/time of a P0 image pointed to by the pointer P0 and that of a P1 image pointed to by the pointer P1 is equal to or smaller than a time value t (for example, 20 minutes). If the difference is equal to or smaller than the value t ("YES" in step S1003), the process advances to step S1004. On the other hand, if the difference is larger than the value t ("NO" in step S1003), the process advances to step S1011.

In step S1004, it is determined whether the P1 image is the last image of the list created in step S1001. If the P1 image is the last image ("YES" in step S1004), the process advances to step S1005. In step S1005, the pointer P1 is substituted for the pointer P2, and the process advances to step S1009. On the other hand, if the P1 image is not the last image of the list ("NO" in step S1004), the process advances to step S1006. In step S1006, the pointer P1 is moved to the next image. In step S1007, it is determined again whether the difference between the shooting date/time of the P0 image and that of the P1 image is equal to or smaller than the time value t. If the difference is equal to or smaller than the value t ("YES" in step S1007), the process returns to step S1004 to repeat the processing. On the other hand, if the difference is larger than the value t ("NO" in step S1007), the process advances to step S1008 to set the pointer P2 to an image immediately before the P1 image, thereby advancing to step S1009. Since the pointer P1 points to the first image after the time t1 elapses from the shooting date/time of the P0 image, the processing in step S1008 designates, by the pointer P2, the last image within the time t1 after the shooting date/time of the P0 image immediately before the image pointed to by the pointer P1. This makes it possible to specify a P2 image temporally farthest within t minutes after the shooting date/time of the P0 image.

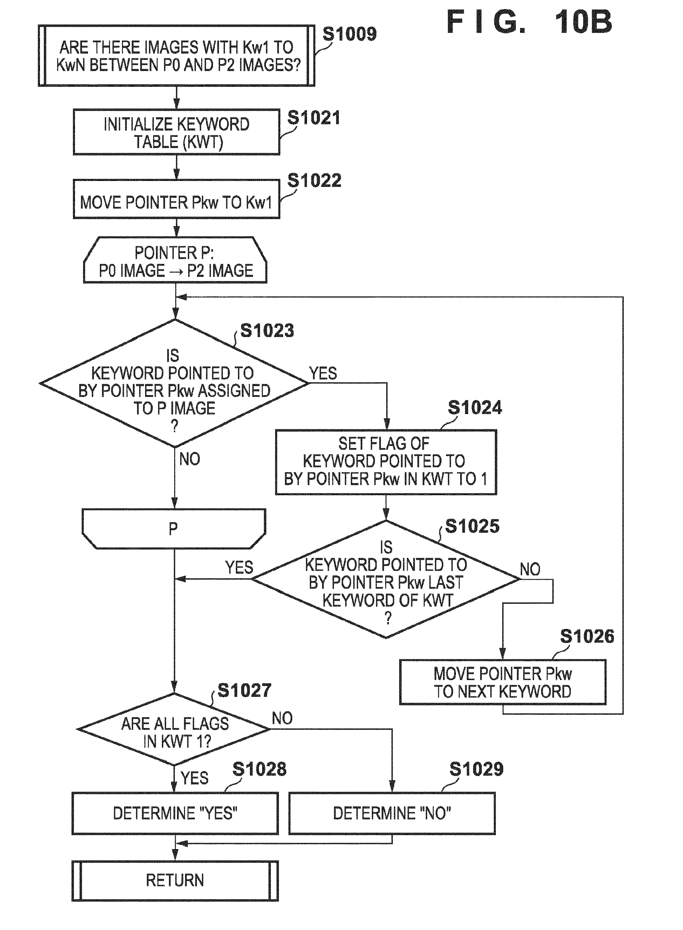

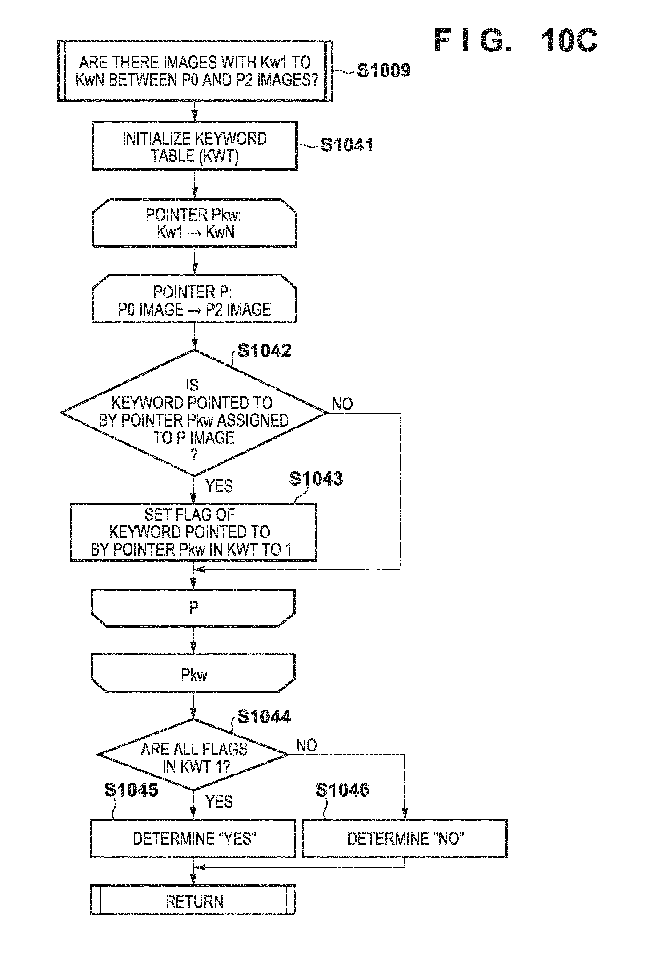

In step S1009, it is determined whether there is a keyword, among the keywords Kw1 to KwN, which is not assigned to any of the images from the P0 image to the P2 image. Note that details of the processing in step S1009 will be described later with reference to Figs. 10B and 10C. If there is an image for each keyword ("YES" in step S1009), the process advances to step S1010 and the P0 image, the P2 image, and images shot between them are acquired from the database and added to a search result. The process then advances to step S1011. On the other hand, if there is a keyword which is not assigned to any image ("NO" in step S1009), the process advances to step S1011. In step S1011, it is determined whether the P0 image is the last image of the list created in step S1001. If the P0 image is the last image ("YES" in step S1011), in step S1013, the search result is outputted on the display unit 107 and the process ends; otherwise ("NO" in step S1011), the process advances to step S1012, and the pointer P0 is moved to the next image of the list, thereby repeating the processing in step S1003 and subsequent steps.

In the dialog 800 shown in Fig. 8, it is possible to designate, by the box 813, whether to perform a search in time-series in consideration of the appearance order of the keywords. Whether the box 813 is checked or not is associated with the determination processing in step S1009 of the above process. The processing in step S1009 when the appearance order of the keywords is considered (Fig. 10B) and that when the appearance order of the keywords is not considered (Fig. 10C) will be separately explained in detail below.

Fig. 10B is a flowchart illustrating an example of the determination processing when the appearance order of the keywords is considered. In step S1021, the keyword table (KWT) on the RAM 102 is initialized. In this example, the keywords Kw1 to KwN are registered in the table and "0" is set as the value of each flag 903. An example of the keyword table is as shown in Fig. 9. A pointer Pkw is used to sequentially designate the keywords Kw1 to KwN registered in the keyword table 900. The images of the list between the P0 image and the P2 image are sequentially designated using a pointer P.

In step S1022, the pointer Pkw is moved to the keyword Kw1. The process advances to step S1023 to determine whether the keyword pointed to by the pointer Pkw is assigned to a P image designated by the pointer P. If the keyword is assigned ("YES" in step S1023), the process advances to step S1024; otherwise ("NO" in step S1023), the pointer P is moved to the next image, thereby repeating the processing in step S1023. In step S1024, the flag value of the keyword designated by the pointer Pkw among the keywords registered in the keyword table 900 is set to "1". The process then advances to step S1025 to determine whether the keyword designated by the pointer Pkw is the last keyword of the keyword table 900. If the designated keyword is the last keyword ("YES" in step S1025), the process advances to step S1027; otherwise ("NO" in step S1025), the process advances to step S1026. In step S1026, the pointer Pkw is moved to the next keyword, thereby repeating the processing in step S1023 and subsequent steps. The processing in steps S1023 to S1026 sequentially determines whether each of the keywords Kw1 to KwN registered in the keyword table 900 is assigned to a designated image while designating the images between the P0 image and the P2 image in chronological order. This allows a search in time-series in consideration of the appearance order of the keywords.

After the aforementioned processing, it is determined in step S1027 whether all the flag values set for the keywords Kw1 to KwN of the keyword table 900 are "1". If the values of all the flags 903 are "1" ("YES" in step S1027), "YES" is determined in step S1028. In the flowchart of Fig. 10A, therefore, the process advances to step S1010. If not all of the values of the flags 903 are "1" ("NO" in step S1027), "NO" is determined in step S1029. In the flowchart shown in Fig. 10A, therefore, the process advances to step S1011.

The determination processing when the appearance order is not considered will now be described. Fig. 10C is a flowchart illustrating an example of the determination processing when the appearance order of the keywords is not considered. In step S1041, the keyword table (KWT) on the RAM 102 is initialized. In this example, the keywords Kw1 to KwN are registered and "0" is set as the value of each flag 903. An example of the keyword table is as shown in Fig. 9. The pointer Pkw is used to sequentially designate the keywords Kw1 to KwN registered in the keyword table 900. The images of the list between the P0 image and the P2 image are sequentially designated using the pointer P.

In step S1042, it is determined whether the keyword pointed to by the pointer Pkw is assigned to the image designated by the pointer P. If the keyword is assigned ("YES" in step S1042), the process advances to step S1043 to set the value of the flag 903 of the keyword table 900 to "1". On the other hand, if the keyword is not assigned, the pointer P is moved to repeat the processing in step S1042. In step S1042, it is determined for each keyword designated by the pointer Pkw whether the designated keyword is assigned to each of the images between the P0 image and the P2 image. In this example, therefore, irrespective of the appearance order of the keywords, if there is an image assigned one of the keywords among the images between the P0 image and the P2 image, that image is specified.

If the determination processing is performed for all the keywords, the process advances to step S1044 to determine whether the values of all the flags 903 of the keyword table 900 have been set to "1". If all the values have been set to "1" ("YES" in step S1044), the process advances to step S1045, thereby determining "YES" in step S1009. In the flowchart shown in Fig. 10A, therefore, the process advances to step S1010. On the other hand, if there is a keyword for which the value of the flag 903 has not been set to "1" ("NO" in step S1044), the process advances to step S1046, thereby determining "NO" in step S1009. In the flowchart shown in Fig. 10A, therefore, the process advances to step S1011.

The above description is provided without specifically considering the setting of the field 901 of the keyword table 900. If the field 901 is set, the following processing can be executed. For example, it is determined in step S1023 or S1042 whether the keyword pointed to by the pointer Pkw is included in metadata of a type designated in the field 901, among the metadata of the P image designated by the pointer P. In the example shown in Fig. 9, for the keyword Kw1 "temple", "comment" is set in the field 901, and it is thus determined whether the term "temple" is included in an item "comment" of the metadata of the P image.

Note that a dialog and main window for displaying a search result according to this embodiment are the same as those in the first embodiment and a description thereof will be omitted. With the aforementioned processing, even if not all of N keywords given as search conditions to the file search apparatus according to this embodiment are assigned to each image, it is possible to search for a desired image.

### [Third Embodiment]

In the first and second embodiments, a case in which the PC application according to each embodiment searches for files that satisfy predetermined temporal relationships with respect to a file assigned a predetermined keyword has been explained. To the contrary, in this embodiment, geographic information is considered as relationship information about the relationship between files, instead of temporal information. More specifically, a file search is performed by specifying files each of which satisfies predetermined geographic conditions (geographic relationships) with respect to a file assigned one of a plurality of keywords and is assigned another one of the plurality of keywords. An image search apparatus is assumed. In this case, among images the shooting positions of which fall within a given range, an image assigned a predetermined keyword is searched for. A block diagram showing a file search apparatus according to this embodiment is the same as that in the first embodiment and a description thereof will be omitted.

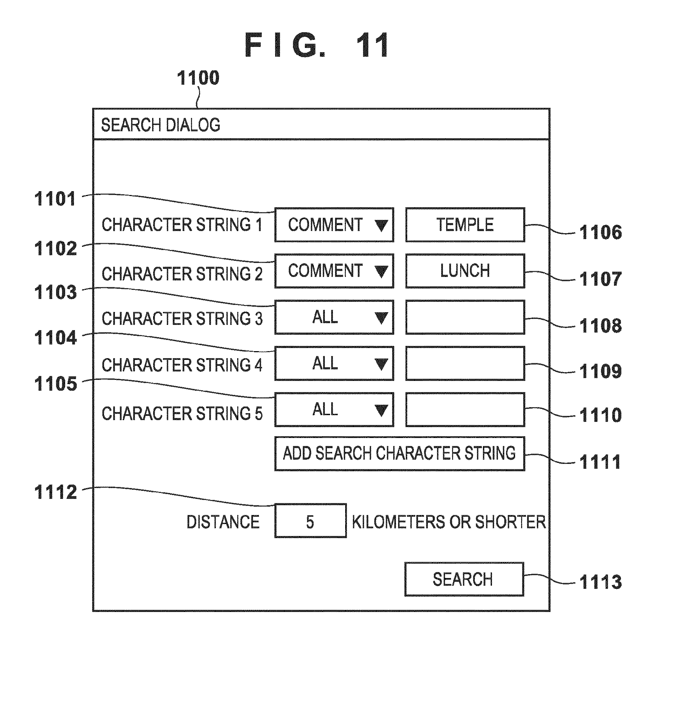

Fig. 11 is a view showing an example of a display screen displayed on a display unit 107 of a PC 100 when the user instructs a keyword search in the file search apparatus or application according to the embodiment. In a dialog 1100, combo boxes 1101 to 1105 are areas for accepting designation of a metadata area (field) to be searched for a keyword designated by the user. In this embodiment, it is possible to designate the type of metadata included in the metadata header portion of an image, such as "keyword", "comment", "person", "place name", or "event". Alternatively, it is also possible to designate "all" metadata. Note that arbitrary information managed in association with search target contents can be designated as search conditions, similarly to the first embodiment.

The user can input text as keywords to text boxes 1106 to 1110. The user can input one keyword in each text box. Referring to Fig. 11, keywords "temple" and "lunch" are input. A button 1111 is pressed to input six or more keywords. When the button 1111 is clicked, the dialog 1100 extends in the vertical direction, thereby allowing the user to input more keywords. A box 1112 is a text box for inputting a longest possible shooting distance as the distance between the shooting locations of images assigned the above keywords. In this example, a value of "5" kilometers is input. A button 1113 is pressed to start a search, similarly to a button 205 shown in Fig. 2.

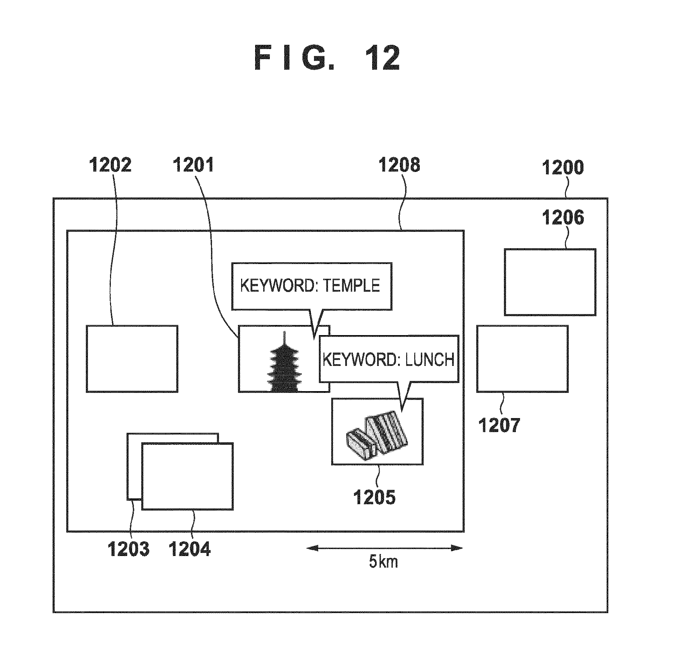

Fig. 12 is a view for explaining images to be searched for based on the search conditions shown in Fig. 11. In this example, a map 1200 is used. Images 1201 to 1207 are thumbnail images corresponding to some of images in the hard disk of the PC 100. Assume that the image 1201 is assigned the keyword "temple" and the image 1205 is assigned the keyword "lunch". The application according to this embodiment obtains, as a search result, the images 1201 to 1205 within an area 1208 having a side of 2 × D (D is a value input to the box 1112) kilometers and having the image 1201 as the barycenter or center if a predetermined keyword is assigned to one of the images shot within the area 1208.

In Fig. 12, the area 1208 for specifying images as a search result has a rectangular shape. The embodiment of the present invention is not limited to this, and a circle, ellipse, or arbitrary polygon may be possible. For example, for a circle, the value designated in the box 1112 can be set as the radius of the circle. For an ellipse, one of the semi-minor axis and the semi-major axis of the ellipse can be set as the value designated in the box 1112, and the other one can be set based on the shape of the ellipse. Furthermore, for a polygon, the distance between the barycenter and an arbitrary vertex or the length of a side can be set based on the value designated in the box 1112. In the following description, the area 1208 will be simply used irrespective of the shape of the area.

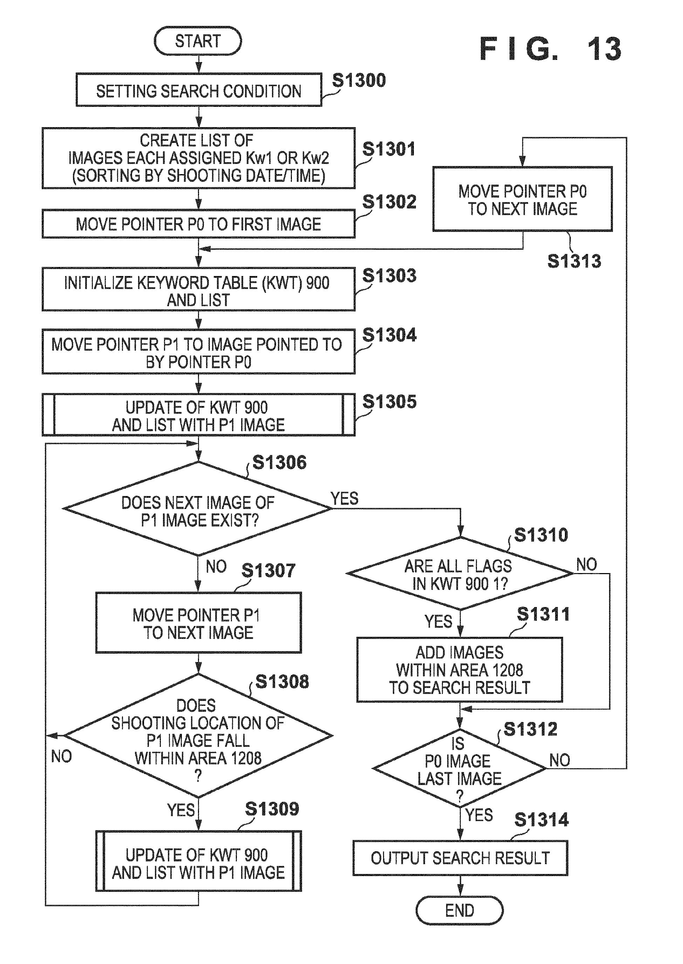

The operation of the file search apparatus or application according to this embodiment will be described. Fig. 13 is a flowchart corresponding to the search processing explained with reference to Fig. 12. To perform the processing, programs for metadata acquisition processing and search processing are loaded from a secondary storage device 104 into a RAM 102 and executed by a CPU 101.

When the user instructs a keyword search, in step S1300, the search conditions are set by receiving inputs from the user using the dialog 1100. In step S1301, a database in the secondary storage device 104 is searched for images each assigned the keyword "temple" (to be referred to as Kw1 hereinafter) or "lunch" (to be referred to as Kw2 hereinafter) designated as the search conditions. At this time, the function of the database is used to sort the images in chronological order based on their shooting dates/times. Note that data of all images in the hard disk of the PC 100 are registered in the database. Techniques of registering data in the database, searching the database for data, and sorting data are well known, and a description thereof will be omitted. The images acquired from the database are stored as a list of the file paths of the images in the RAM 102. A field for storing, as a flag value, the result of determination of whether an image is included in the area 1208 is provided in the list. As another example, the acquired images may be stored as a list of integral values (identification information) each unique to each image, as a matter of course. The process advances to step S1302, and a pointer P0 is moved to the first image of the list created in step S1301. As another example, the data type of P0 may be an integral value corresponding to a given row of the list.

The process then advances to step S1303 to create/initialize a keyword table (KWT) on the RAM 102. A keyword table used in the embodiment is the same as that shown in Fig. 9 and a description thereof will be omitted. In addition, as the initialization processing of the list created in step S1301, the flag values of all the images of the list are reset to "0". The process advances to step S1304, and a pointer P1 is moved to the same image as that (P0 image) pointed to by the pointer P0. A pointer P1 desirably has the same type as that of the pointer P0. The process advances to step S1305 to update a keyword table 900 with the P1 image. That is, if a keyword assigned to the P1 image is stored in the keyword table 900, the flag of the row of the keyword is changed to "1". Furthermore, the flag value of the P1 image in the list is changed to "1".

In step 1305, first keyword and field are obtained from the keyword table (KWT) 900 and are stored as variables Kw and Fld, respectively. In the case of Fig. 9, the first keyword is "temple" and the first field is "comment". Second keyword and field may be obtained instead of the first keyword and field. The Fld may have a character string type or may be an integer value (identification information) unique to a type of the metadata. Next, it is determined whether or not the metadata of the type indicated by the Fld among the metadata of an image pointed by P0 (P0 image) stores the Kw. When the Kw is not stored, it is determined whether or not the Kw is the last keyword on the keyword table 900. On the other hand, when the Kw is stored, the flag value of the Kw on the keyword table 900 is changed to "1" and it is determined whether or not the Kw is the last keyword on the keyword table 900. When the Kw is the last keyword, the process will advance to step S1306. On the other hand, when the Kw is not the last keyword, for the next keyword and field on the keyword table 900, the above processing will be repeated.

The process advances to step S1306 to determine whether the next image of the image (P1 image) pointed to by the pointer P1 exists in the list. If the next image exists in the list ("YES" in step S1306), the process advances to step S1307; otherwise ("NO" in step S1306), the process advances to step S1310.

In step S1307, the pointer P1 is moved to the next image. In step S1308, it is determined whether the shooting location of the P1 image falls within the area 1208 having the shooting location of the P0 image as the barycenter or center. This determination is made based on GPS information as position information which is one type of metadata assigned to the image. The GPS information may be acquired from each image file or the database when acquiring the images in step S1301 or immediately before the determination processing in step S1308. The GPS information includes the latitude, longitude, altitude, and time. A method of calculating the distance between two sets of the latitude and longitude is well known and a description thereof will be omitted.

The process advances to step S1309. If the keyword assigned to the P1 image is stored in the keyword table 900, the flag of the row of the keyword is changed to "1". Details of this processing are the same as those provided with reference to S1305 and a description thereof will be omitted. Furthermore, if the keyword assigned to the P1 image is stored in the keyword table 900, the flag value of the P1 image in the list is also changed to "1". With this processing, an image which has a predetermined keyword and exists within a predetermined distance designated by the user from the P0 image can be a search result candidate.

The process returns to step S1306 to continue the process. If it is determined in step S1306 that the next image of the P1 image does not exist in the list, the process advances to step S1310. In step S1310, it is determined whether the flags of all the rows of the keyword table 900 are "1". If the flags of all the rows are "1", the process advances to step S1311, and all the images within the area 1208 having the P0 image as the barycenter are acquired from the database and added to a search result. Since the images within the area 1208 can be identified as images with the flag values "1" in the list, they can be acquired using the file paths of images with the flag values "1" in the list. After that, the process advances to step S1312. If it is determined in step S1310 that there is at least one row in which a corresponding flag is "0", the process advances to step S1312.

In step S1312, as described above, it is determined whether the P0 image is the last image of the list. If the P0 image is the last image, in step S1314, the search result is outputted on the display unit 107 and the search processing ends. On the other hand, if the P0 image is not the last image, the process advances to step S1313 to move the pointer P0 to the next image. After that, the process advances to step S1303 to continue the process. In this way, the images in the list are sequentially selected.

Note that in the file search apparatus or application according to this embodiment, a display screen for displaying a search result obtained by the search processing shown in Fig. 13 is the same as a dialog 600 shown in Fig. 6, and a description thereof will be omitted. Note that when each of jump buttons 617 to 619 is clicked, an image with an earliest shooting date/time is automatically selected from images included in a corresponding search result and set as a reference, the main window of the application is scrolled, and images assigned keywords and images between them are displayed. The user can also see temporally adjacent images with respect to the images as a search result, that is, images shot before an image 702 and images shot after an image 706. At this time, the images included in the search result may be highlighted so as to be discriminated from other images.

The main window according to this embodiment is the same as that shown in Fig. 7 and a description thereof will be omitted. As another operation in Fig. 6, when the user clicks one image, the image may be set to a selected state. When the jump button is then clicked, the main window may be scrolled, thereby displaying images with shooting dates/times before and after the shooting date/time of the selected image. Alternatively, when adding images to a search result in step S1311, the P0 image is stored. When the user clicks the jump button in Fig. 6, the main window may be scrolled, thereby displaying images before and after the P0 image in chronological order based on the shooting dates/times.

Note that since the area 1208 is set for each image pointed to by the pointer P0 and the pointer P0 sequentially designates the images of the list in the aforementioned search processing, a number of set areas may overlap each other. In this case, if all the search results are displayed, a number of similar search results are displayed, thereby spoiling the user convenience. To solve this problem, when search results obtained for each P0 image are compared with each other and images included in the search results overlap each other at a given ratio (for example, 70%) or higher, a search result including a largest number of images may be selected. Alternatively, a search result including a larger number of images with the most important one of keywords may be selected. Furthermore, a plurality of search results may be combined to obtain one search result.

As described above, even if three or more keywords given as search conditions to the file search apparatus according to the embodiment are not assigned to each image, it is possible to search for a desired image.

### Other Embodiments

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. A file search apparatus (100) having a setting means (101) configured to set, as search conditions for specifying a file to be searched for, a plurality of pieces of attribute information and relationship information about a relationship between files, a first search means (101) configured to search for a file having at least one of the pieces of attribute information set by the setting means, a second search means (101) configured to search for a plurality of files, among the files found by the first search means, which satisfy a condition based on the relationship information set by the setting means, and an output means for outputting, as a search result, the plurality of files found by the second search means.

## Claims

1. A file search apparatus (100) comprising:
a setting means (101) configured to set, as search conditions for specifying a file to be searched for, a plurality of pieces of attribute information and relationship information about a relationship between files;
a first search means (101) configured to search for a file having at least one of the pieces of attribute information set by said setting means;
a second search means (101) configured to search for a plurality of files, among the files found by said first search means, which satisfy a condition based on the relationship information set by said setting means; and
an output means (107) configured to output, as a search result, the plurality of files found by said second search means.

2. The apparatus according to claim 1, wherein
said output means outputs a search result for a group of files discriminated based on the relationship information.

3. The apparatus according to claim 1 or 2, wherein
the attribute information specifies a keyword assigned to the file.

4. The apparatus according to any one of claims 1 to 3, wherein
the relationship information specifies a temporal relationship or geographic relationship between a plurality of files.

5. The apparatus according to any one of claims 1 to 4, wherein
said setting means designates a use order of the search conditions, and sets the plurality of pieces of attribute information.

6. The apparatus according to any one of claims 1 to 5, further comprising
a selection means (101) configured to select, together with the files found by said second search means, files before and after the files found by said second search means, which do not have the attribute information.

7. The apparatus according to claim 6, further comprising
an edit means (101) configured to collectively edit the plurality of files selected by said selection means.

8. A file search method comprising:
a setting step (S400, S420, S1000, S1300) of setting, as conditions for specifying a file to be searched for, a plurality of pieces of attribute information and relationship information about a relationship between files;
a first search step (S401, S421, S1001, S1301) of searching for a file having at least one of the pieces of attribute information set in the setting step;
a second search step (S405-S409, S425-S430, S1009, S1305, S1309) of searching for a plurality of files, among the files found in the first search step, which satisfy a condition based on the relationship information set in the setting step; and
an output step (S412, S434, S1013, S1314) of outputting, as a search result, the plurality of files found in the second search step.

9. A non-transitory computer readable storage medium storing a computer program which causes a computer to perform a file search method, said method comprising:
a setting step (S400, S420, S1000, S1300) of setting, as conditions for specifying a file to be searched for, a plurality of pieces of attribute information and relationship information about a relationship between files;
a first search step (S401, S421, S1001, S1301) of searching for a file having at least one of the pieces of attribute information set in the setting step;
a second search step (S405-S409, S425-S430, S1009, S1305, S1309) of searching for a plurality of files, among the files found in the first search step, which satisfy a condition based on the relationship information set in the setting step; and
an output step (S412, S434, S1013, S1314) of outputting, as a search result, the plurality of files found in the second search step.

10. An image search apparatus (100) comprising:
a setting means (101) configured to set, as image search conditions, a plurality of keywords and a temporal condition between images; and
a search means (101) configured to search for an image, among a plurality of images stored in storage means, which matches the image search conditions,
wherein the image to be searched for is an image which has at least one of the plurality of keywords and satisfies the temporal condition between an image having one of the plurality of keywords and another image having another keyword.

11. The apparatus according to claim 10, wherein
each group of images which match the temporal condition is displayed.

12. The apparatus according to claim 10 or 11, wherein
the image to be searched for includes an image having a shooting date/time between a shooting data/time of the image assigned one keyword and a shooting date/time of the image assigned the other keyword.

13. The apparatus according to any one of claims 10 to 12, wherein
said setting means designates a use order of the image search conditions, and sets the plurality of keywords.

14. An image search (100) apparatus comprising:
a setting means (101) configured to set, as image search conditions, a plurality of keywords and a geographic condition between images; and
a search means (101) configured to search for an image, among a plurality of images stored in storage means, which matches the image search conditions,
wherein the image to be searched for is an image which has at least one of the plurality of keywords and satisfies the geographic condition between an image having one of the plurality of keywords and another image having another keyword.
